# EUROPÄISCHE PATENTANMELDUNG

(11) **EP 2 420 158 A2**
(43) Veröffentlichungstag der Anmeldung: **22.02.2012**
(21) Anmeldenummer: 11176222.5
(22) Anmeldetag: 02.08.2011
(51) Int. Cl.: A47B 77/08, F16B 5/02, F24C 15/30

(54) **Befestigungselement zum Befestigen eines Haushaltsgerätes und Haushaltsgerät mit einem Befestigungselement**

(30) Priorität: 18.08.2010 DE 102010039449
(71) Anmelder: BSH Bosch und Siemens Hausgeräte GmbH, 81739 München (DE)
(72) Erfinder: Fleissner, Reinhard, 83352 Altenmarkt a.d. Alz (DE); Mallinger, Peter, 83301 Traunreut (DE); Saebi, Ahmad, 83301 Traunreut (DE); Schumann, Dirk, 83022 Rosenheim (DE)

(57) **Zusammenfassung**

Befestigungselement zum Befestigen eines Haushaltsgerätes, insbesondere eines Einbaubackofens an einer Küchenmöbelfront, welches Befestigungselement als separates, an dem Haushaltsgerät befestigbares Teil ausgebildet ist. Das Befestigungselement weist einen Anschlag (26) für eine Tür (4) des Haushaltsgerätes auf.

## Beschreibung

Die vorliegende Erfindung betrifft ein Befestigungselement zum Befestigen eines Haushaltsgerätes gemäß dem Oberbegriff des Anspruchs 1, sowie ein Haushaltsgerät mit einem solchen Befestigungselement.

Ein gattungsgemäßes Haushaltsgerät in Form eines Einbaubackofens weist in einer frontseitigen Ansicht eine Bedienblende mit Bedienelementen und Anzeigeelementen auf. Unterhalb der Bedienblende ist eine nach unten schwenkbare Tür angeordnet. Zwischen der Bedienblende und der Tür ergibt sich ein schmaler, vertikaler Spalt, durch den während des Betriebes des Einbaubackofens Kühlluft ausgeblasen wird. Bedienblende und Tür sind mit Ihren Frontflächen in einer vertikalen Ebene, die sich parallel zu einer Küchenmöbelfront erstreckt, angeordnet. Die Tür liegt in Ihrer Schließstellung an einer Dichtung an, die in einem Spalt zwischen einer Muffel und einem umlaufend dazu angeordneten Flansch eingebettet ist. Bei ungünstiger Toleranzlage der Tür, der Türscharniere oder der Dichtung ergeben sich Abweichungen der vertikalen Flucht zwischen Tür und Bedienblende. Derartige Abweichungen ergeben sich auch bei Gerätevarianten mit unterschiedlichen Ausprägungen bzw. Materialien der Türdichtungen, der Scharniere oder sonstiger Türbauteile. Insbesondere bei seitlicher Betrachtung zeigt sich dies beispielsweise durch einen Rücksprung der geschlossenen Tür gegenüber der Bedienblende, was von einem Benutzer des Haushaltsgerätes als optischer Mangel gewertet wird.

Der Erfindung liegt deshalb die Aufgabe zugrunde, ein Haushaltsgerät zu schaffen, das in einfacher Weise trotz Fertigungstoleranzen, bzw. unterschiedlicher Designausprägungen ein vertikales Fluchten von Tür und Bedienblende gewährleistet.

Diese Aufgabe wird durch ein Befestigungselement zum Befestigen eines Haushaltsgerätes, sowie durch ein Haushaltsgerät mit einem Befestigungselement, jeweils mit den Merkmalen des Patentanspruchs 1 gelöst. Vorteilhafte Ausgestaltungen sind den Unteransprüchen einzeln oder in Kombination zu entnehmen.

Gemäß dem kennzeichnenden Teil des Patentanspruches 1 weist das Befestigungselement einen Anschlag für eine Tür des Haushaltsgerätes auf. Dadurch ist ein definierter Anlagepunkt für die Tür erreicht, wodurch z. B. bei geschlossener Tür eine außen liegende Fläche einer Türscheibe, sowie eine Oberfläche einer über der Tür angeordneten Bedienblende miteinander fluchten, bzw. in einer Ebene positioniert sind. Insbesondere bei Haushaltsgeräten, bei denen die Bedienblende am Flansch befestigt ist, ergibt sich zum ebenfalls am Flansch befestigten Anschlag eine kurze Toleranzkette, wodurch ein Fluchten von Bedienblende und Tür leicht erreichbar ist. Weist das Haushaltsgerät eine um einen Nutzraum umlaufende, im geschlossenen Zustand der Tür an dieser anliegende Dichtung auf, so wird diese durch den Anschlag definiert zusammengedrückt.

Bei einer bevorzugten Ausgestaltung ist der Anschlag aus dämpfendem Material ausgebildet. Vorteilhafterweise wird dadurch beispielsweise beim schnellen Schließen der Tür ein Klappern von Türscheiben beim Auftreffen der Tür auf den Anschlag verhindert. Zudem ist dadurch bei einer unsachgemäßen Handhabung durch einen Benutzer des Haushaltsgerätes eine Beschädigung der Tür aufgrund eines harten Aufschlages auf den Anschlag verhindert. Die Dämpfungseigenschaft ist materialabhängig und ist zudem durch entsprechende Formgebung des Anschlags beeinflussbar.

Bevorzugt ist es, wenn das Befestigungselement einen Korpus aufweist, wobei der Korpus und der Anschlag aus unterschiedlichen Kunststoffmaterialien gebildet sind. Die Verwendung von Kunststoff ermöglicht eine preisgünstige Herstellbarkeit. Der Korpus kann beispielsweise aus glasfaserverstärktem PBT hergestellt sein, wohingegen der Anschlag aus Silikon gebildet ist. Durch die Kombination derart unterschiedlicher Kunststoffe sind ein mechanisch stabiler Korpus und zugleich ein Anschlag mit guten Dämpfungseigenschaften erreichbar.

Eine bevorzugte Weiterbildung besteht in der Herstellung das Befestigungselementes mittels eines Zwei-Komponenten Kunststoff-Spritzguss-Verfahrens. Durch ein derartiges Herstellungsverfahren sind Korpus und Anschlag einstückig herstellbar, wodurch neben einer festen und verliersicheren Verbindung auch optisch ansprechende, spaltlose Übergänge zwischen den beiden Materialien erzeugt werden. Für ein solches Verfahren können beispielsweise glasfaserverstärktes Polypropylen für den Korpus und ein thermoplastisches Elastomer für den Anschlag verwendet werden. Um eine mechanisch besonders stabile Verbindung zu erreichen, weist der Korpus Geometrien auf, die beim Umspritzen mit dem Material des Anschlags eine formschlüssige, bzw. umgreifende Verbindung erzeugen.

Durch eine ringförmige Ausbildung des Anschlags ist eine Schraube zum Befestigen des Haushaltsgerätes beispielsweise mittig durch den Anschlag steckbar, wodurch sich eine platzsparende Ausbildung des Befestigungselementes ergibt.

Vorzugsweise weist der Korpus eine Mittelachse auf, die gegenüber einer Senkrechten auf eine rückseitige Auflagefläche des Anschlags um einen Winkel geneigt ist. Eine derartige Ausbildung bewirkt, dass eine Schraube zum Befestigen des Haushaltsgerätes an einer Stirnseite eines Küchenmöbels versetzt zu einer Schrauböffnung ansetzt und dadurch schräg in diese Stirnseite schraubbar ist. Dies ist insbesondere dann von Vorteil, wenn die Schraubstelle nicht mittig zu der Stirnseite des Küchenmöbels angeordnet werden kann. Durch ein schräges Anschrauben wird insbesondere bei schmalen Möbelkanten, die beispielsweise 16mm betragen, ein Aufspalten des Möbels durch den Mittenversatz der Anschraubstelle vermieden. Bevorzugt weist die Mittelachse gegenüber der Senkrechten einen Winkel kleiner 20°, besonders bevorzugt kleiner 10° auf.

Eine an den Anschlag einstückig angeformte Abdeckkappe dient dazu, das Schraubloch des Befestigungselementes zu Verschließen. Durch die Anformung an den Anschlag ist die Abdeckkappe preisgünstig ohne zusätzlichen Arbeitsschritt herstellbar. Weist der Anschlag eine mittige Schrauböffnung zum Durchstecken einer Befestigungsschraube auf, so ergibt sich eine optisch besonders ansprechende Ausgestaltung.

Eine bevorzugte Weiterbildung besteht darin, dass die Abdeckkappe entgegen der Richtung einer Kraft F gewölbt ausgebildet ist. Dadurch ist beispielsweise bei einer ringförmigen Ausbildung des Anschlags eine pilzkopfförmige Ausgestaltung der Kombination von Abdeckkappe und Anschlag möglich, wodurch diese optisch ansprechend wirkt. Ist der Anschlag aus einem dämpfenden Material ausgebildet, so ermöglicht die gewölbte Ausbildung der Abdeckkappe eine zusätzliche Dämpfung und dadurch eine verbesserte Gesamtdämpfung der Tür im Bereich ihrer Schließstellung.

Des Weiteren betrifft die Erfindung ein Haushaltsgerät, insbesondere einen Einbaubackofen, mit dem erfindungsgemäßen Befestigungselement, wobei das Haushaltsgerät eine Aussparung in einem Flansch aufweist, in der das Befestigungselement insbesondere durch Verrasten befestigbar ist. Dabei ist unter dem Flansch ein, an eine Öffnung eines Nutzraumes des Haushaltsgerätes im Wesentlichen umlaufend angrenzendes Bauteil zu verstehen, das großteils durch die geschlossene Tür verdeckt ist und im Wesentlichen parallel zu dieser ausgebildet ist. Alternativ kann die Aussparung im Flansch derart ausgestaltet sein, dass das Befestigungselement beispielsweise über einen Bajonett ― Verschluss oder eine Schraubbewegung am Flansch befestigbar ist.

Bevorzugt weist der Flansch zu einer Stirnseite eines Küchenmöbels zumindest eine parallele Fläche auf, die im eingebauten Zustand des Haushaltsgerätes von der Stirnseite in einem Abstand angeordnet ist. In dieser parallelen Fläche ist die Aussparung ausgebildet. Ein Korpus des Befestigungselementes weist eine Höhe auf, die im Wesentlichen dem Abstand der parallelen Fläche zur Stirnseite entspricht. Dadurch wird ein hohler Schraubfall vermieden. Es treten bei einer derartigen Ausbildung keine kritischen Spannungen durch das Verschrauben auf, die insbesondere bei einem emaillierten Flansch eines Backofens zu Emailschäden führen können.

Eine unrunde Kontur der Aussparung in Verbindung mit einem an einem Korpus des Befestigungselementes ausgebildeten Verdrehschutzelement gewährleistet die richtige Positionierung einer Befestigungsschraube zur Küchenmöbelfront. Dies gilt insbesondere bei im Wesentlichen rotationssymmetrisch ausgebildeten Befestigungselementen, bei denen die Befestigungsschraube in einer von einer Senkrechten zur Küchenmöbelfront abweichenden Richtung geführt ist.

In einer vorteilhaften Ausgestaltung der Erfindung bildet eine Flanschvorderseite eine Anlage für eine rückseitige Auflagefläche des Anschlags. Dadurch ist lediglich das Funktionselement in Form des Anschlags für einen Benutzer des Haushaltsgerätes sichtbar. Der restliche Teil des Befestigungselementes ist hinter dem Flansch verborgen.

Weitere Merkmale und Vorteile der Erfindung ergeben sich aus der nachfolgenden Beschreibung eines Ausführungsbeispiels unter Bezugnahme auf die beigefügten Figuren. Es zeigen:
- **Fig.** 1: ein als Einbaubackofen ausgebildetes Haushaltsgerät in einer räumlichen Darstellung;
- **Fig.** 2: den Einbaubackofen ohne Tür in einem eingebauten Zustand, sowie eine Detailansicht der Anschraubsituation mittels eines Befestigungselementes an einem Küchenmöbel;
- **Fig.** 3: das Befestigungselement in einer räumlichen Darstellung;
- **Fig.** 4: das Befestigungselement in einer seitlichen Ansicht;
- **Fig.** 5: das Befestigungselement in einer gedrehten Schnittdarstellung gemäß der Schnittlinie in **Fig.** 1 und
- **Fig.** 6: das Befestigungselement ohne Anschlag in einer räumlichen Darstellung.

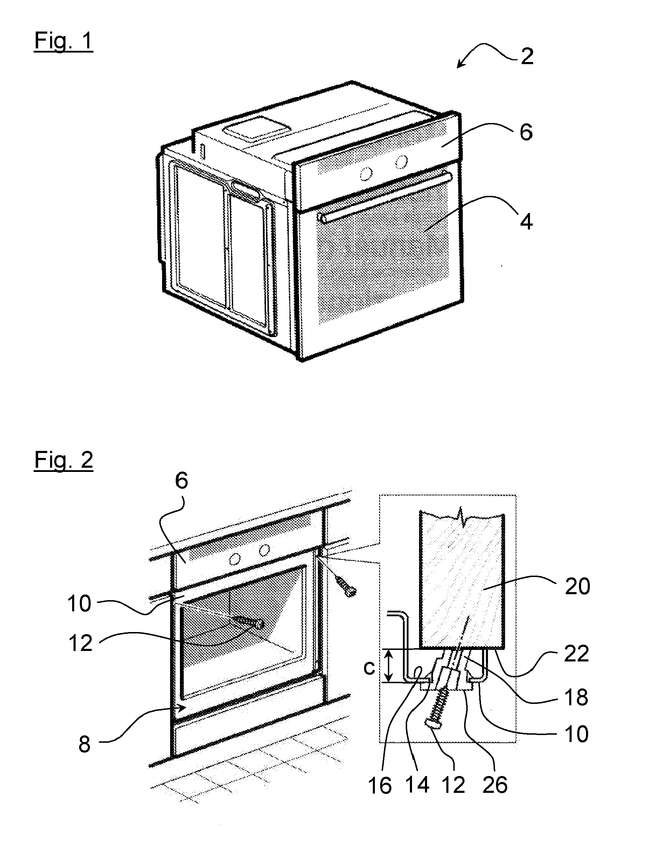

Das in **Fig.** 1 gezeigte Haushaltsgerät 2 in Ausprägung eines Backofens weist eine Tür 4, sowie eine darüber angeordnete Bedienblende 6 auf. Die Tür 4 ist als Klapptür ausgeführt und nach unten verschwenkbar gelagert. An der Tür 4 und der Bedienblende 6 ausgebildete, einem Benutzer des Backofens zugewandte Frontflächen liegen in einer gemeinsamen, vertikalen Ebene.

**Fig.** 2 zeigt den Einbaubackofen ohne Tür 4, eingebaut in einer Küchenmöbelfront, wobei der Einbaubackofen einen Flansch 8 mit einer Flanschvorderseite 10 aufweist. Diese wird durch die geschlossene Tür 4 (in Fig. 1) verdeckt. Im oberen Bereich des Flansches 8 ist der Einbaubackofen gegenüber unbeabsichtigtem Herausziehen aus der Küchenmöbelfront durch zwei Befestigungsschrauben 12 gesichert. Dabei ist eine Befestigungsschraube 12 an einem oberen linken, und die andere Befestigungsschraube 12 an einem oberen rechten Endbereich des Flansches 8 angeordnet. Wie die schematische Detailansicht in Fig. 2 zeigt, weist die Flanschvorderseite 10 dabei eine Aussparung 14 auf, in der ein Befestigungselement 18 gelagert ist. Dieses liegt an der Flanschvorderseite 10 an und stützt sich an einer Flanschrückseite 16 ab. Durch das mit dem Flansch 8 verbundene Befestigungselement 18 ist die Befestigungsschraube 12 in ein Küchenmöbel 20 einschraubbar. Eine Stirnseite 22 des Küchenmöbels 20 wird dabei vom Flansch 8 nicht vollständig überdeckt, um eine Kollisionen mit angrenzenden Küchenmöbelteilen zu verhindern. Dadurch bedingt ist Aussparung 14 außerhalb einer Mitte der Stirnseite 22 des Küchenmöbels angeordnet. Das Befestigungselement 18 ist deshalb derart ausgebildet, dass es die Befestigungsschraube 12 schräg, von dem Einbaubackofen weg weisend führt. Dadurch setzt die Befestigungsschraube 12 annähernd mittig in der Stirnseite 22 des Küchenmöbels 20 an, wodurch ein Spalten des Küchenmöbels, das beispielsweise aus einer 16 mm dicken Spanplatte hergestellt ist, verhindert wird. Das Befestigungselement 18 ist zudem derart ausgestaltet, dass es einen Abstand c zwischen der Flanschvorderseite 10 und der Stirnseite 22 des Küchenmöbels 20 überbrückt und dadurch einen hohlen Schraubfall verhindert. Ein derartiger hohler Schraubfall könnte beispielsweise bei einem emaillierten Flansch 8 Emailschäden aufgrund von Materialverformungen beim Anschrauben hervorrufen. Der Flansch 8 ist im Bereich der Aussparungen 14 parallel zu der Stirnseite 22 des Küchenmöbels ausgestaltet. Das Befestigungselement 18 weist einen Anschlag 26 für eine Innenfläche der Tür 4 auf, wodurch die geschlossenen Tür 4 zum Flansch 8 definiert beabstandet ist.

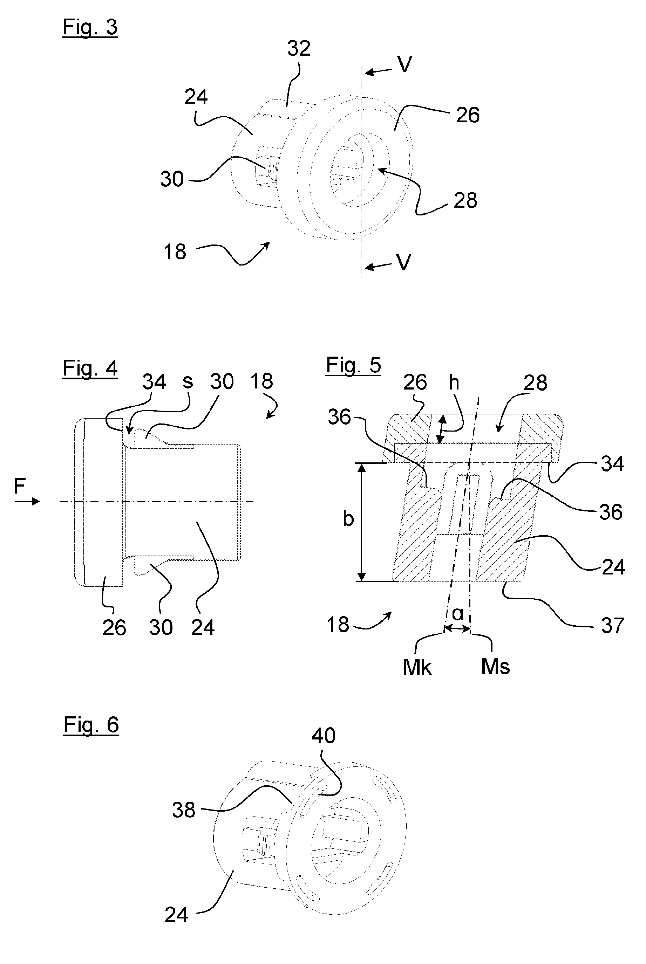

In **Fig.** 3 ist das Befestigungselement 18 mit einem Korpus 24 und dem Anschlag 26 gezeigt. Der Anschlag 26 weist eine Schrauböffnung 28 auf, sie sich in den Korpus 24 hinein erstreckt. Das Befestigungselement ist aus zwei Kunststoffsorten gebildet, wobei der Korpus aus glasfaserverstärktem Polypropylen und der Anschlag aus einem Thermoplastischen Elastomer (TPE) hergestellt ist. Zwei am Korpus 24 angeformte, bewegliche Rastelemente 30 bilden nach einem Einstecken des Befestigungselementes 18 in die Aussparung 14 einen Formschluss mit der Flanschrückseite 16 und sorgen für einen sicheren Halt des Befestigungselementes 18 im Flansch 8. Zum lagerichtigen Montieren des Befestigungselementes 18 weist dieses einen Verdrehschutz 32 in Form einer längs des Korpus 24 verlaufenden Sicke auf. Die Aussparung 14 im Flansch 8 weist eine damit korrespondierende Ausnehmung auf, wodurch das Befestigungselement nur in einer vorgegebenen Lage montierbar ist.

Die Rastelemente 30 mit einer gegenüberliegenden, rückseitigen Auflagefläche 34 bilden entsprechend **Fig.** 4 einen Spalt s, der in etwa einer Flanschdicke, gebildet aus der Distanz zwischen Flanschvorderseite 10 und Flanschrückseite 16, entspricht. Auf den Anschlag 26 wirkt beim Schließen der Tür 4 im Bereich Ihrer Schließstellung eine Kraft F, die den aus weichem Kunststoff gebildeten Anschlag 26 deformiert und dadurch ein hartes Anschlagen der Tür verhindert. Die Tür 4 ist derart ausgebildet, dass sie im geschlossenen Zustand beide Befestigungselemente 18 vollständig abdeckt (siehe Fig. 1). Durch den Anschlag 26 der Befestigungselemente 18 wird die Tür 4 beim Schließen gedämpft, wobei die Tür derart am Anschlag 26 zur Anlage kommt, dass die Frontflächen von der Tür 4 und der Bedienblende 6 fluchten, bzw. in einer Ebene liegen.

Eine Anlage 36 für einen Schraubenkopf der Befestigungsschraube 12 ist entsprechend der Schnittdarstellung in **Fig.** 5 ausgebildet. Dabei bildet die Schrauböffnung 28 einen Kanal zum Einführen der Befestigungsschraube 12, der den Anschlag 26, sowie einen Teil des Korpus 24 durchzieht. Der Querschnitt des Kanals ist nur geringfügig größer als ein Kopfdurchmesser der Befestigungsschraube 12. Die Anlage 36 ist derart positioniert, dass die Befestigungsschraube 12 im eingeschraubten Zustand unterhalb des verformbaren Anschlags 26 liegt. Nach der Anlage 36 verringert der durch die Schrauböffnung 28 gebildete Kanal seinen Querschnitt, sodass lediglich ein Gewindeteil der Befestigungsschraube 12 durchsteckbar ist. Eine Höhe b des Befestigungselementes 18 wird von dem Abstand der rückseitigen Auflagefläche 34 zu einer Bodenfläche 37 des Korpus 24 gebildet und entspricht annäherungsweise der Höhe c zwischen der Stirnseite 22 des Küchenmöbels 20 und der Flanschvorderseite 10. Eine Mittelachse Mk des Korpus 24 ist gegenüber einer Senkrechten Ms auf die rückseitige Anlagefläche 34 des Befestigungselementes 18 um einen Winkel α von 9° geneigt, wodurch die schräge Führung der Befestigungsschraube 12 ermöglicht ist. Die Dämpfungswirkung des Anschlags 26 ist neben der Elastizität des verwendeten Materials zudem von der Formgebung und von der Höhe h des Anschlags 26 abhängig. Der Anschlag 26 wird dabei durch ein Zwei-Komponenten Kunststoff-Spritzguss-Verfahren stoffschlüssig mit dem Korpus 24 verbunden.

Um ein Lösen des Anschlags 26 vom Korpus 24 auch bei extremen Belastungen zu verhindern, weist der Korpus entsprechend **Fig.** 6 Ausklinkungen 38 und darin angeordnete Schlitze 40 auf, die neben dem Stoffschluss zusätzlich noch einen Formschluss bewirken, wodurch eine unlösbare Verbindung ausgebildet ist.
- 2: Haushaltsgerät
- 4: Tür
- 6: Bedienblende
- 8: Flansch
- 10: Flanschvorderseite
- 12: Befestigungsschraube
- 14: Aussparung
- 16: Flanschrückseite
- 18: Befestigungselement
- 20: Küchenmöbel
- 22: Stirnseite
- 24: Korpus
- 26: Anschlag
- 28: Schrauböffnung
- 30: Rastelement
- 32: Verdrehschutz
- 34: rückseitige Auflagefläche
- 36: Anlage
- 37: Bodenfläche
- 38: Ausklinkung
- 40: Schlitz
- α: Winkel
- b: Höhe
- c: Höhe
- F: Kraft
- h: Höhe
- Mk: Mittelachse
- Ms: Senkrechte
- s: Spalt

## Patentansprüche

1. Befestigungselement zum Befestigen eines Haushaltsgerätes, insbesondere eines Einbaubackofens an einer Küchenmöbelfront, welches Befestigungselement als separates, an dem Haushaltsgerät befestigbares Teil ausgebildet ist, **dadurch gekennzeichnet, dass** das Befestigungselement einen Anschlag (26) für eine Tür (4) des Haushaltsgerätes aufweist.

2. Befestigungselement nach Anspruch 1, **dadurch gekennzeichnet, dass** der Anschlag (26) aus dämpfendem Material ausgebildet ist.

3. Befestigungselement nach Anspruch 1 oder 2, **dadurch gekennzeichnet, dass** das Befestigungselement einen Korpus (24) aufweist, wobei der Korpus und der Anschlag (26) aus unterschiedlichen Kunststoffmaterialien ausgeführt sind.

4. Befestigungselement nach Anspruch 3, **dadurch gekennzeichnet, dass** das Befestigungselement in einem Zwei-Komponenten Kunststoff-Spritzguss-Verfahren hergestellt ist.

5. Befestigungselement nach einem der vorhergehenden Ansprüche, **dadurch gekennzeichnet, dass** das der Anschlag (26) ringförmig ausgebildet ist.

6. Befestigungselement nach einem der vorhergehenden Ansprüche, **dadurch gekennzeichnet, dass** der Korpus (24) eine Mittelachse (Mk) aufweist, die gegenüber einer Senkrechten (Ms) auf eine rückseitige Auflagefläche (34) des Anschlags (26) um einen Winkel (α) geneigt ist.

7. Befestigungselement nach einem der vorhergehenden Ansprüche, **dadurch gekennzeichnet, dass** an den Anschlag (26) einstückig eine Abdeckkappe angeformt ist, die zum Verschließen eines Schraubloches (28) des Befestigungselements ausgebildet ist.

8. Befestigungselement nach Anspruch 7, **dadurch gekennzeichnet, dass** das die Abdeckkappe entgegen der Richtung einer Kraft (F) gewölbt ausgebildet ist.

9. Haushaltsgerät, insbesondere Einbaubackofen mit einem Befestigungselement (18) nach einem der vorhergehenden Ansprüche, zum Befestigen des Haushaltsgerätes an einer Küchenmöbelfront.

10. Haushaltsgerät nach Anspruch 9, **dadurch gekennzeichnet, dass** es eine Aussparung (14) in einem Flansch (8) aufweist, in der das Befestigungselement (18) insbesondere durch Verrasten befestigbar ist.

11. Haushaltsgerät nach Anspruch 10, **dadurch gekennzeichnet, dass** der Flansch (8) zu einer Stirnseite (22) eines Küchenmöbels (20) zumindest eine parallele Fläche aufweist, die im eingebauten Zustand des Haushaltsgerätes von der Stirnseite (22) in einem Abstand (c) angeordnet ist und in welcher parallelen Fläche die Aussparung (14) ausgebildet ist, wobei ein Korpus (24) des Befestigungselementes (18) eine Höhe (b) aufweist, die im Wesentlichen dem Abstand (c) entspricht.

12. Haushaltsgerät nach einem der Ansprüche 10 oder 11, **dadurch gekennzeichnet, dass** die Aussparung (14) eine unrunde Kontur aufweist, die mit einem an einem Korpus (24) des Befestigungselementes ausgebildeten Verdrehschutzelement (32) zusammenwirkt.

13. Haushaltsgerät nach einem der Ansprüche 10 bis 12, **dadurch gekennzeichnet, dass** eine Flanschvorderseite (10) eine Anlage für eine rückseitige Auflagefläche (34) des Anschlags (26) bildet.
